# FASCICULE DE BREVET EUROPEEN

(11) **EP 1 767 898 B1**
(45) Date de publication et mention de la délivrance du brevet: **26.07.2017**
(21) Numéro de dépôt: 06121261.9
(22) Date de dépôt: 26.09.2006
(51) Int. Cl.: G01B 17/02

(54) **Procédé de mesure de l'épaisseur de couches par ondes de surface**
Verfahren zur Messung der Dicke von Schichten mittels Oberflächenwellen
Method of measuring the thickness of layers by surface waves

(30) Priorité: 26.09.2005 FR 0552882
(43) Date de publication de la demande: 28.03.2007
(73) Titulaire: Safran Aircraft Engines, 75015 Paris (FR); ULTRA RS, 10430 Rosieres-pres-Troyes (FR)
(72) Inventeur: Belahcene, Farid, 10000, TROYES (FR); Chatellier, Jean-Yves, 94110, ARCUEIL (FR); Cortesi, Pierre, 91250, SAINT GERMAIN LES CORBEIL (FR); Ducrocq, Christian, 91480, VARENNES-JARCY (FR)
(74) Mandataire: Gevers & Orès

(56) Documents cités:
- FR-A- 2 101 258
- US-A- 4 574 637
- US-A- 4 730 494
- US-A- 5 648 611
- US-A- 5 894 092
- US-B1- 6 363 787

## Description

La présente invention concerne le contrôle non destructif de pièce et vise en particulier le contrôle de l'épaisseur ou la profondeur de traitement d'une pièce métallique.

Dans un moteur à turbine à gaz aéronautique, un pièce fortement sollicitée est la bague de roulement du palier de turbine basse pression. Afin d'obtenir une couche superficielle durcie, on traite la pièce par nitruration dans un four sous atmosphère azotée. Il s'agit d'un traitement thermochimique de diffusion d'azote seul, réalisé entre 300 et 900°C. La zone nitrurée s'étend sur une profondeur inférieure au millimètre.

Selon un mode de contrôle connu, lors d'une campagne de nitruration d'un lot d'un certain nombre de pièces, on adjoint au lot dans le four des secteurs de bague de roulement.

Après traitement on découpe ces éprouvettes, et on leur fait subir des essais de dureté Vickers par tranches de 1/10 de mm de profondeur. On trace des courbes appelées courbes de filiation de dureté à partir des valeurs mesurées, et on y lit la profondeur associée à une dureté donnée. On procède aussi à un examen microphotographique des éprouvettes. L'épaisseur traitée correspond à l'épaisseur du métal dont la dureté est supérieure à la dureté donnée.

Cette méthode présente des inconvénients.
- Elle demande du temps pour effectuer les coupes et les essais.
- On détruit une pièce par campagne de traitement.
- On ne connaît l'épaisseur qu'en un seul endroit de la bague. La - méthode ne permet pas de savoir s'il y a excentricité ou bien si les conditions opératoires ne sont pas homogènes dans le four.
- On ne mesure l'épaisseur que sur une éprouvette témoin et non sur chacune des pièces traitées.

Il existe donc un besoin, et c'est l'objectif de l'invention, pour une méthode de mesure de l'épaisseur de la couche traitée qui soit à la fois non destructive et rapide.

Il serait souhaitable aussi que cette méthode fournisse un mesure précise, par exemple à + ou - 0,05 mm, de la couche traitée.

Enfin cette méthode devrait permettre la mesure en des points différents de la pièce, en particulier pour une bague de roulement, en différents points de sa circonférence.

On connaît les techniques de contrôle non destructif faisant intervenir des ondes sonores et ultrasonores. Par exemple le brevet US 5987991 décrit une méthode d'évaluation ou de validation d'une zone traitée dont on recherche la présence de défectuosités, telle que le bord d'attaque d'une aube de fan d'un turboréacteur durci par choc laser, comprenant la détermination des angles critiques d'ondes de Rayleigh produites à la surface de la pièce par un générateur de faisceaux d'ondes ultrasonores. L'invention permet de satisfaire aux besoins énoncés ci-dessus en mettant en oeuvre une nouvelle application des ondes de Rayleigh ou ondes de surface.

Conformément à l'invention, le procédé de détermination de l'épaisseur d'une couche superficielle d'une pièce notamment métallique, ladite couche présentant une structure différente de celle du matériau constituant la pièce sous ladite couche, consiste à générer un faisceau d'ondes de Rayleigh à la surface de la pièce à une première fréquence, et mesurer la vitesse de propagation des ondes, répéter l'opération en générant des ondes de Rayleigh à des fréquences différentes, relever les vitesses de propagation des ondes et les longueurs d'ondes correspondantes, et les classer par longueurs d'ondes croissantes, l'épaisseur de ladite couche étant définie par la longueur d'onde à partir de laquelle on constate un plateau de variation de ladite vitesse, comme divulgué dans les revendications 1 à 6.

Les ondes générées sont avantageusement comprises dans l'intervalle de 1 à 15 MHz et plus particulièrement de 3 à 12 MHz. Dans ce dernier cas, les profondeurs explorées vont de 0,25 à 1 mm.

L'invention résulte de l'observation selon laquelle les ondes de Rayleigh qui évoluent sur de faibles épaisseurs au voisinage de la surface du matériau sont sensibles à toute modification structurale de cette couche superficielle.

Il s'ensuit que toute modification structurale affecte la vitesse de propagation d'une onde de Rayleigh.

Par ailleurs, on sait qu'en modifiant la fréquence de l'onde, on modifie sa profondeur de pénétration, mais cette variation de fréquence n'affecte pas la vitesse de propagation d'une onde de Rayleigh.

Il suffit donc en modifiant la fréquence de relever à partir de quelle profondeur la vitesse se stabilise. Cette profondeur correspond à l'épaisseur de la couche superficielle qui présente une structure différente de celle du reste du matériau.

A la connaissance de la demanderesse, on n'a pas jusqu'à présent utilisé les ondes de Rayleigh pour mesurer l'épaisseur d'une mince couche en surface d'un matériau présentant une microstructure différente de celle du reste du matériau ; cette différence résultant d'un traitement appliqué en surface tel que la nitruration, la cémentation mais aussi le grenaillage, le galetage ou autre.

De préférence, on applique la méthode à la détermination de couches nitrurées d'épaisseur au moins égales à 0,3 mm.

La méthode présente des avantages certains par rapport à l'art antérieur.
- Elle est rapide : de l'ordre de 5 minutes contre 15 heures pour un contrôle destructif.
- Elle est économique car aucune pièce, qui en soi peut être onéreuse, n'est détruite.
- Elle est juste. L'écart ente la mesure de l'épaisseur par cette méthode et celle effectuée à partir d'épaisseurs issues de dissection est de + ou - 0,05 mm.
- Elle permet de multiplier les points de contrôle sur la même pièce ou bien sur les différentes pièces d'un même lot.
- On contrôle la pièce elle même et non un témoin.

On connaît le brevet US 4730494 qui porte sur une technique qui opère à très haute fréquence 300/500 MHz. Elle ne vise que des couches très minces de l'ordre de 5µm. On connaît également US 5648611 qui utilise des ondes de Rayleigh et réalise au préalable des abaques : vitesse de propagation/épaisseur pour plusieurs fréquences. Le contrôle est en fait effectué à une seule fréquence avec mesure de la vitesse de propagation correspondante. L'invention outre la simplicité de sa mise en oeuvre permet une précision plus grande 0,05 mm contre 0,5 mm. Le document US-A-4 730 494 divulgue un procédé de détermination de l'épaisseur d'une couche.

On décrit maintenant l'invention plus en détail en référence aux dessins annexés sur lesquels
- la figure 1 montre le schéma d'un dispositif de contrôle pour la mise en oeuvre de l'invention.
- la figure 2 montre l'application d'un dispositif de la figure 1 au contrôle d'une bague de roulement.
- la figure 3 montre la trace d'un signal sur un oscilloscope correspondant au parcours de l'onde de rayleigh.
- la figure 4 montre un exemple de courbe de filiation.
- La figure 5 montre une courbe de la vitesse de propagation des ondes de surface en fonction de la profondeur de pénétration des ondes de surface pour un exemple de bague de roulement nitrurée.

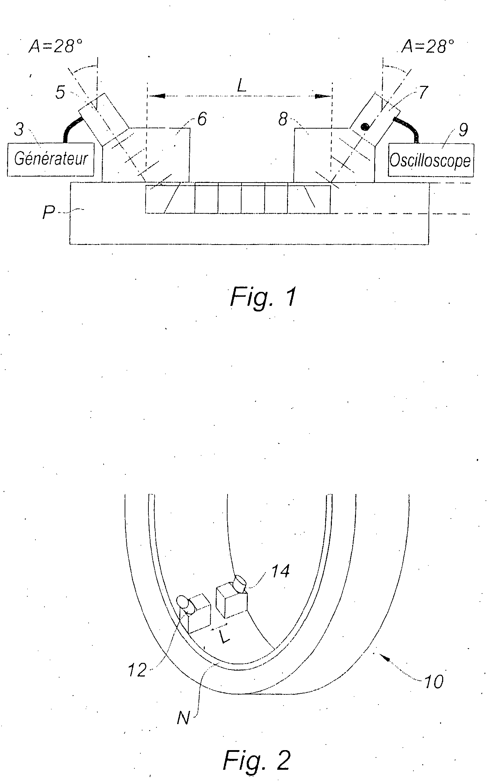

On se reporte à la figure 1. On a représenté un générateur d'impulsions 3 qui délivre un signal électrique de quelques MHertz et dont la fréquence est en rapport avec le transducteur ultrasonore utilisé. Le signal électrique est converti en ondes ultrasonores de même fréquence par le transducteur 5 par effet piézoélectrique. Le transducteur est monté sur un socle 6 en coin, de matériau approprié tel que le PMMA. Le socle est posé à la surface de la pièce P et y est fixé par des moyens connus. L'angle A que forme le transducteur, donc la direction des ondes émises, avec la surface de la pièce est déterminé en fonction du matériau de la pièce, et est aussi en soi connu. Par exemple pour le titane l'angle est de 30°, pour l'acier il est de 28°. Il s'agit d'un angle critique de propagation de l'onde. Il est tel qu'une conversion de mode s'opère à l'interface coin / matériau et une onde de Rayleigh se propage alors parallèlement et au voisinage de la surface de la pièce.

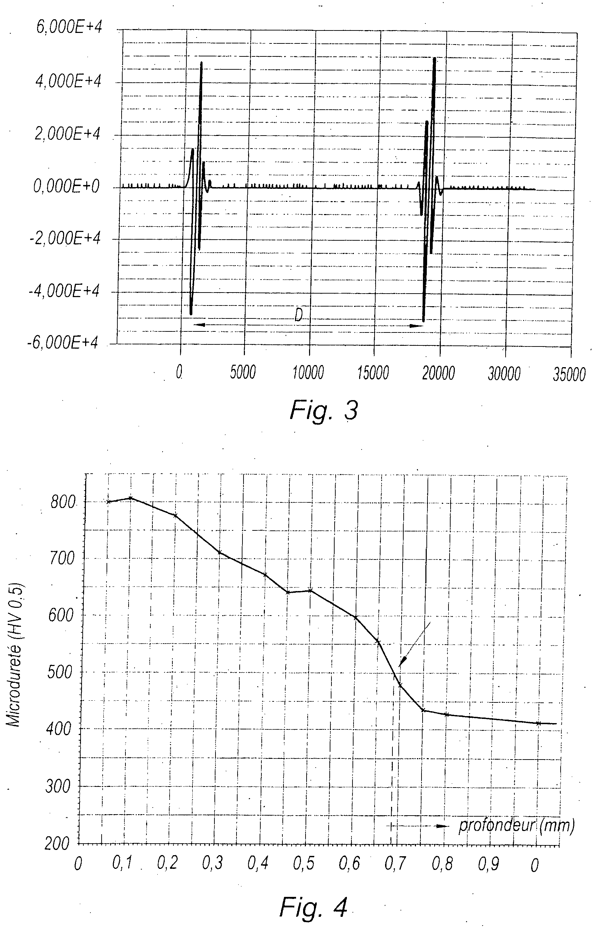

L'onde de Rayleigh, qui rayonne de l'énergie dans la direction indiquée par l'angle + ou - A, atteint le second socle 8 disposé symétriquement par rapport au premier et est reçue par le transducteur 7 semblable au premier. L'onde ultrasonore est reconvertie en signal électrique par effet piézoélectrique par ce transducteur récepteur. La distance L entre les deux capteurs est prédéterminée et fixe. Le signal électrique recueilli est envoyé dans un oscilloscope 9. On a représenté, sur la figure 3, la trace produite sur l'écran de l'oscilloscope. La distance D entre les trains d'ondes visualisés sur l'oscilloscope permet de mesurer ainsi le temps de propagation de l'onde. Connaissant par ailleurs la distance L, on détermine la vitesse de propagation de l'onde.

Toute modification de la vitesse n'est imputable qu'à une modification de l'état du matériau. Ceci est dû à la nature non dispersive des ondes de Rayleigh.

Par ailleurs, on sait que l'épaisseur sur laquelle s'exerce la sensibilité de cette onde est de l'ordre de la longueur d'onde λ. En effet le champ des contraintes induites par l'onde devient négligeable au delà de la profondeur égale à λ. En modifiant la fréquence des ondes de Rayleigh, on modifie donc la profondeur de pénétration dans le matériau.

La relation λ. = V_{Rayleigh}/f où f est la fréquence de l'onde de Rayleigh, et V_{Rayleigh} la vitesse de l'onde de Rayleigh en m/s est vraie lorsque la structure du matériau traversé par l'onde reste la même quand on fait varier la profondeur de pénétration de l'onde.

Ainsi, conformément à l'invention, en mesurant la vitesse de propagation des.ondes pour des fréquences différentes, c'est-à-dire pour des profondeurs de pénétration différentes, jusqu'à ce que la vitesse ne varie plus, on détermine la profondeur à laquelle se situe le matériau non traité de la pièce.

### Tests

Pour vérifier la méthode, on a procédé à des tests sur des bagues de roulement de palier de rotor basse pression d'un moteur à turbine à gaz qui ont subi un traitement de nitruration, et après enlèvement de la couche blanche. L'épaisseur de nitruration est normalement déterminée à partir de mesures de dureté Vickers. Un secteur d'éprouvette témoin placé au voisinage de la pièce en traitement thermochimique sert à l'estimation de la dureté. Un essai de dureté est pratiqué point par point tous les 0,05 mm de profondeur en partant de la périphérie de la bague. A chaque position on relève la dureté Vickers (microdureté HV 0,5). On trace une courbe appelée courbe de filiation où la dureté est rapportée pour chaque profondeur (en mm). On a reproduit sur la figure 4 une telle courbe. La procédure adoptée considère que l'épaisseur de nitruration est celle pour la quelle la dureté atteint la valeur 500Vickers. Ainsi dans l'exemple rapporté l'épaisseur de nitruration est de 0,67 mm.

On a effectué les essais sur une bague d'épaisseur de nitruration de 0,53 mm.

Sur la figure 2, on a représenté une bague 10 avec une couche nitrurée N sur la face interne de la zone de roulement dont on souhaite évaluer l'épaisseur. On voit la disposition des deux transducteurs, l'un émetteur 12 et l'autre 14 récepteur à la distance L déterminée. La direction des deux transducteurs est de préférence axiale pour éviter de devoir prendre en considération la courbure de la pièce. Les deux transducteurs sont reliés, le premier à un générateur d'impulsions de type MATEC qui a la particularité d'engendrer une onde mono fréquentielle, le second à un oscilloscope.

Sur cette bague, on a procédé à des mesures en plusieurs points le long de l'axe et sur la circonférence. Les mesures ont consisté à faire des relevés de vitesse de propagation d'ondes de Rayleigh à différentes fréquences successives choisies de façon à ce que la longueur d'onde soit incrémentée de 0,05 mm.

| Fréquence MHz | Longueur d'onde = pénétration (mm) |
|---|---|
| 12,0 | 0,25 |
| 10,0 | 0,30 |
| 8,6 | 0,35 |
| 7,5 | 0,40 |
| 6,7 | 0,45 |
| 6,0 | 0,50 |
| 5,45 | 0,55 |
| 5,0 | 0,60 |
| 4,6 | 0,65 |
| 4,3 | 0,70 |
| 4 | 0,75 |
| 3,75 | 0,80 |
| 3,53 | 0,85 |

On a ensuite reporté, dans un repère orthonormé, en abscisse, la profondeur de pénétration de l'onde de Rayleigh et en ordonnée la vitesse de propagation telle que mesurée avec le dispositif. On a tracé la courbe polynomiale passant pas les points notés.

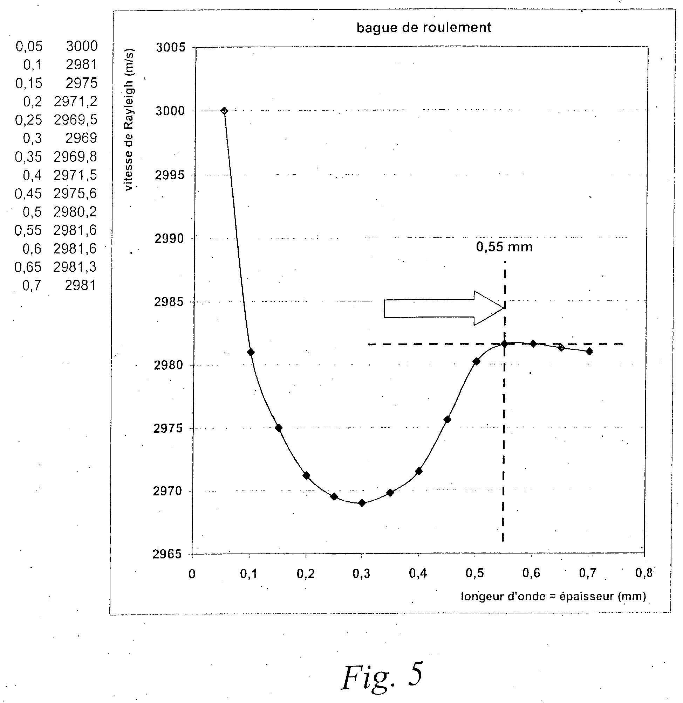

On voit sur le graphe de la figure 5 que la vitesse décroît fortement aux très faibles épaisseurs, zone de la pièce ayant de forts gradients de contraintes résiduelles. La vitesse de propagation après avoir atteint un minimum croit jusqu'à atteindre un pseudo palier dès lors que l'épaisseur investigée dépasse la profondeur de nitruration. On peut estimer sur la figure 5 l'épaisseur nitrurée à 0,55 mm.

En traçant la courbe pour la mesure effectuée en différents points, répartis les uns axialement et les autres sur la circonférence de la face interne de la bague, on constate que la courbe reste sensiblement la même. Cette observation permet d'en déduire que la répartition de la nitruration reste uniforme.

La méthode permet de valider le traitement de lots de pièces de manière à la fois rapide, fiable et complète. De préférence on contrôle un nombre déterminé de pièces du lot, au maximum toutes les pièces.

Pour chaque pièce, on contrôle plusieurs points répartis sur la pièce. Par exemple, pour une bague, on contrôle quatre points diamétralement opposés deux à deux.

Après nitruration, la surface est recouverte d'une couche dite « blanche » que l'on enlève par rectification de la surface. Cette couche présente une épaisseur de l'ordre de 100µm. Le contrôle est effectué de préférence après enlèvement de cette couche « blanche ».

On comprend toutefois que l'invention ne se limite pas au contrôle de pièces nitrurées. Elle s'applique à tout traitement entraînant une modification superficielle de la structure du matériau sur une épaisseur qui peut être de l'ordre du millimètre.

La méthode proposée se distingue des autres, et permet à partir d'une seule courbe sur l'éprouvette d'estimer l'épaisseur de nitruration, sans avoir à passer par des abaques préalablement établies sur un grand nombre de pièces nitrurées à des profondeurs différentes. Du fait que l'on fait varier la fréquence avec le pas que l'on souhaite, la précision de la méthode si on se réfère au tableau est de 0,05 mm. Un plan d'expérience complet a permis de montrer une plus grande robustesse et justesse de la méthode ultrasonore décrite en comparaison à la méthode destructive dite de filiation de dureté.

## Revendications

1. Procédé de détermination de l'épaisseur d'une couche superficielle d'une pièce (10) présentant une structure différente de celle du matériau constituant la pièce sous ladite couche, comprenant les étapes consistant à engendrer (12) un faisceau d'ondes de Rayleigh à la surface de la pièce à une première fréquence, et à mesurer la vitesse de propagation des ondes, le procédé comprenant également les étapes consistant à répéter plusieurs fois l'opération avec des ondes de Rayleigh à des fréquences différentes, les fréquences des ondes générées étant comprises entre 1 et 15 MHz, à relever les vitesses de propagation des ondes et les longueurs d'ondes correspondantes, et à les classer par longueurs d'ondes croissantes, l'épaisseur de ladite couche étant définie par la longueur d'onde à partir de laquelle on constate un plateau de variation de ladite vitesse.

2. Procédé selon la revendication 1 selon lequel on mesure la vitesse de propagation des ondes entre un premier transducteur (12) à la surface de la pièce d'émission des ondes de surface et un second transducteur (14) à une distance déterminée de réception des ondes de surfaces.

3. Procédé selon la revendication 1 dont la couche est une couche obtenue par traitement d'une pièce métallique.

4. Procédé selon la revendication précédente dont le traitement de surface est mécanique tel que le grenaillage ou le galetage.

5. Procédé selon la revendication 3 dont le traitement est thermochimique tel que la nitruration ou la cémentation.

6. Procédé selon la revendication 3 appliqué à la validation d'un lot de pièces traitées.

## Patentansprüche

1. Verfahren zur Bestimmung der Dicke einer oberflächlichen Schicht eines Teils (10), die eine andere Struktur als diejenige des Materials aufweist, aus dem das Teil unter der Schicht besteht, wobei es die Schritte umfasst, die darin bestehen, einen Strahl von Rayleigh-Wellen auf der Oberfläche des Teils mit einer ersten Frequenz zu erzeugen (12), und die Geschwindigkeit der Wellenausbreitung zu messen, wobei das Verfahren auch die Schritte umfasst, die darin bestehen, die Operation mit Rayleigh-Wellen mehrere Male mit verschiedenen Frequenzen zu wiederholen, wobei die die Frequenzen der erzeugten Wellen zwischen 1 und 15 MHz liegen, um die Geschwindigkeiten der Wellenausbreitung und die entsprechenden Wellenlängen zu erhöhen und durch die anwachsenden Wellenlängen die Dicke der Schicht zu klassifizieren, wobei die Dicke der Schicht durch die Wellenlänge definiert ist, ausgehend von der ein Plateau der Variation der Geschwindigkeit festgestellt wird.

2. Verfahren nach Anspruch 1, wobei die Geschwindigkeit der Wellenausbreitung zwischen einem ersten Wandler (12) an der Oberfläche des Teils zur Emission von Oberflächenwellen und einem zweiten Wandler (14) in einer bestimmten Abstand zum Empfang von Oberflächenwellen gemessen wird.

3. Verfahren nach Anspruch 1, wobei die Schicht eine Schicht ist, die durch die Behandelung eines Metallteils erhalten wird.

4. Verfahren nach dem vorhergehenden Anspruch, wobei die Behandlung der Oberfläche mechanisch ist, wie das Kugelstrahlen oder das Glätten.

5. Das Verfahren nach Anspruch 3, wobei die Behandlung thermochemisch wie die Nitridierung oder die Aufkohlung ist.

6. Verfahren nach Anspruch 3, das auf die Validierung einer Charge der behandelten Teile angewandt wird.

## Claims

1. Method of determining the thickness of a surface layer of a part (10) having a structure different from that of the material constituting the part beneath said layer, consisting in generating (12) a beam of Rayleigh waves on the surface of the part at a first frequency, in measuring the wave propagation velocity, the method further comprising the steps of repeating the operation several times with Rayleigh waves at different frequencies, the frequencies of the generated waves being between 1 and 15 MHz, in recording the wave propagation velocities and the corresponding wavelengths and in classifying them by increasing wavelengths, the thickness of said layer being defined by the wavelength above which a plateau in the variation of said velocity is observed.

2. Method according to Claim 1, in which the propagation velocity of the waves is measured between a first transducer (12) on the surface of the part for emitting the surface waves and a second transducer (14) a specified distance away for receiving the surface waves.

3. Method according to Claim 1, the layer of which is a layer obtained by treatment of a metal part.

4. Method according to claim 3, the surface treatment of which is a mechanical surface treatment, such as shot peening or roller burnishing.

5. Method according to Claim 3, the surface treatment of which is a thermochemical treatment, such as nitriding or case hardening.

6. Method according to Claim 3, applied to the validation of a batch of treated parts.
